# DEMANDE DE BREVET EUROPEEN

(11) **EP 0 887 609 A1**
(43) Date de publication de la demande: **30.12.1998**
(21) Numéro de dépôt: 98400982.9
(22) Date de dépôt: 22.04.1998
(51) Int. Cl.: F28D 9/00, B23K 26/00

(54) **Procédé d'assemblage des plaques d'un faisceau de plaques et faisceau de plaques réalisé par un tel procédé**

(30) Priorité: 24.06.1997 FR 9707863
(71) Demandeur: PACKINOX, 92084 Paris La Défense (FR)
(72) Inventeur: Huguet, Régis, 71380 Epervans (FR); Merle, Gabriel, 71100 Chalon Sur Saone (FR)
(74) Mandataire: Lanceplaine, Jean-Claude

(57) **Abrégé**

L'invention a pour objet un procédé d'assemblage des plaques (2) d'un faisceau de plaques consistant à positionner à des emplacements déterminés des languettes sur les faces supérieures et inférieures des bords des plaques (2) du faisceau de plaques, à relier chaque languette avec la plaque correspondante par un cordon de soudure (16) continu du type traversant et sans métal d'apport, à superposer et à maintenir les plaques (2) munies des languettes (12) et à relier lesdites plaques munies des languettes par un cordon de soudure (17) continu et étanche, avec ou sans métal d'apport, recouvrant les extrémités libres desdites plaques et desdites languettes.

L'invention a également pour objet un faisceau de plaques réalisé par un tel procédé.

## Description

La présente invention a pour objet un procédé d'assemblage des plaques d'un faisceau de plaques d'échange thermique et un faisceau de plaques réalisé par un tel procédé.

Généralement les faisceaux de plaques pour échangeur thermique comprennent un empilement de plaques parallèles les unes aux autres.

Les plaques constituées de tôles fines, le plus souvent en acier inoxydable ou tout autre matériau suffisamment ductile, comportent des bords à surface lisse et une partie centrale munie d'ondulations par lesquelles elles sont en contact les unes sur les autres et par lesquelles elles délimitent des circuits de circulation d'au moins deux fluides indépendants par exemple à contre-courant ou à courant croisé.

Chaque circuit est relié à des collecteurs d'admission et de retour des fluides.

Les plaques sont assemblées deux par deux au moyen de languettes de liaison soudées sur les bords à surface lisse pour former des couples de plaques et ces couples de plaques sont superposés et assemblés entre eux de façon à former le faisceau de plaques.

Les languettes de liaison sont disposées à des emplacements déterminés pour délimiter des zones d'entrée et de sortie permettant la circulation desdits fluides entre les plaques.

Jusqu'à présent, l'assemblage des plaques de chaque couple de plaques est réalisé de la façon suivante.

Tout d'abord, on positionne à des emplacements déterminés au moins une languette sur la face inférieure des bords de la plaque supérieure, puis on relie par soudure ladite languette à ladite plaque pour former un premier sous-ensemble.

Ensuite, on positionne à des emplacements déterminés au moins une languette sur la face supérieure des bords de la plaque inférieure, puis on relie par soudure ladite languette à ladite plaque pour former un second sous-ensemble.

Chaque cordon de soudure est obtenu par le procédé TIG ou MIG et ce cordon de soudure est réalisé en bout, c'est à dire qu'il recouvre des extrémités libres de la plaque correspondante et des languettes.

Ensuite, les deux sous-ensembles sont superposés et maintenus plaqués l'un sur l'autre par exemple au moyen d'une presse.

Ces deux sous-ensembles sont reliés entre eux par un troisième cordon de soudure obtenu par le procédé TIG ou MIG et ce troisième cordon de soudure est réalisé en bout, c'est à dire qu'il recouvre les deux précédents cordons de soudure reliant la plaque et les languettes de chaque sous- ensemble.

Les couples de plaques ainsi réalisés sont superposés et une couche de soudure est déposée sur toute la hauteur de chaque surface latérale du faisceau de plaques pour former un mur de soudure étanche.

Mais, ce procédé d'assemblage présente des inconvénients.

En effet, le soudage avec métal d'apport nécessite une étape de chauffage de la zone destinée à être soudée, si bien qu'au moment de la réalisation du troisième cordon de soudure recouvrant les deux précédents cordons de soudure, ces deux cordons de soudure subissent une transformation non contrôlée susceptible de modifier les caractéristiques métallurgiques ainsi que la tenue mécanique de ces cordons de soudure.

De plus, au moment de la formation du troisième cordon de soudure, chaque plaque n'étant maintenue sur la languette correspondante qu'au niveau de son extrémité libre, cette languette fait office de cale d'épaisseur encastrée ce qui peut entraîner un fléchissement de la plaque au niveau de ce cordon de soudure.

De plus, ce type d'assemblage limite la pression différentielle entre l'intérieur et l'extérieur du faisceau de plaques, si bien que lorsque les circuits de ce faisceau de plaques travaillent en pression, des déformations et des fissurations peuvent se produire au niveau des cordons de soudure pouvant nuire à l'étanchéité du faisceau de plaques.

L'invention a pour but d'éviter ces inconvénients en proposant un procédé d'assemblage des plaques d'un faisceau de plaques d'échange thermique permettant d'obtenir une meilleure étanchéité des circuits de circulation des fluides ainsi qu'une liaison mécanique particulièrement résistante acceptant des pressions différentielles relativement élevées ce qui élargit le domaine d'utilisation d'un tel faisceau de plaques.

L'invention a donc pour objet un procédé d'assemblage des plaques d'un faisceau de plaques d'échange thermique formé par un empilement de plaques comportant chacune une partie centrale munie d'ondulations et des bords à surface lisse et reliées entre elles par des languettes délimitant des zones d'entrée et de sortie pour la circulation d'au moins deux fluides entre lesdites plaques, caractérisé en ce qu'il consiste :
- à positionner à des emplacements déterminés des languettes sur les faces supérieures et inférieures des bords des plaques du faisceau de plaques,
- à relier chaque languette avec la plaque correspondante par un cordon de soudure continu du type traversant et sans métal d'apport,
- à superposer et à maintenir les plaques munies des languettes,
- et à relier les plaques munies des languettes par un cordon de soudure étanche et continu, avec ou sans métal d'apport, recouvrant les extrémités libres desdites plaques et desdites languettes.

Selon une autre caractéristique de l'invention, chaque cordon de soudure du type traversant est réalisé au moyen d'un faisceau à haute densité d'énergie.

L'invention a également pour objet un faisceau de plaques d'échange thermique, caractérisé en ce qu'il comporte des plaques superposées et assemblées par le procédé mentionné ci-dessus.

L'invention sera mieux comprise à l'aide de la description qui va suivre, donnée à titre d'exemple et faite en référence aux dessins annexés, sur lesquels:
- la Fig. 1 est une vue schématique en perspective d'un faisceau de plaques d'échange thermique dont les plaques sont assemblées par le procédé conforme à l'invention,
- la Fig. 2 est une vue schématique en plan d'une plaque du faisceau de plaques,
- les Figs. 3A à 3D sont des vues schématiques en coupe transversale montrant les différentes étapes du procédé d'assemblage des plaques, conforme à l'invention.
- la Fig. 4 est une vue partielle en élévation d'une face latérale d'un faisceau de plaques d'échange thermique,
- la Fig. 5 est une vue en coupe selon la ligne 5-5 de la Fig. 4.

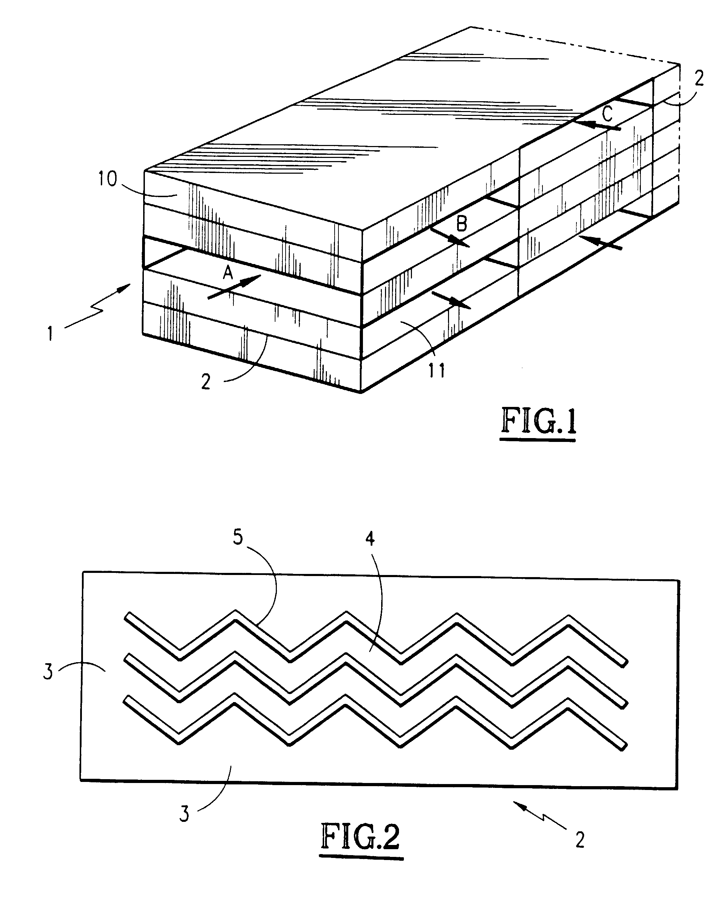

Sur la Fig. 1, on a représenté schématiquement un faisceau de plaques d'échange thermique désigné dans son ensemble par la référence 1 et de forme générale parallélépipèdique.

Ce faisceau de plaques 1 se compose d'un empilement de plaques 2 parallèles les unes aux autres et qui sont constituées chacune d'une tôle fine, le plus souvent en acier inoxydable ou tout autre matériau suffisamment ductile.

Ainsi que représenté à la Fig.2, chaque plaque 2 comporte des bords 3 longitudinaux et transversaux à surface lisse et une partie centrale 4 munie d'ondulations 5 par lesquelles elles sont en contact les unes aux autres et par lesquelles elles délimitent des circuits de circulation de fluides indépendants.

Dans l'exemple de réalisation représenté à la Fig. 1, le faisceau de plaques 1 comporte trois circuits A, B et C de circulation de trois fluides à contre-courant et à courant croisé.

Pour cela, le faisceau de plaques 1 comporte sur ses faces des zones d'extrémité 10 fermées et des zones d'extrémité 11 ouvertes formant des entrées ou des sorties pour les fluides circulant dans les circuits A, B et C.

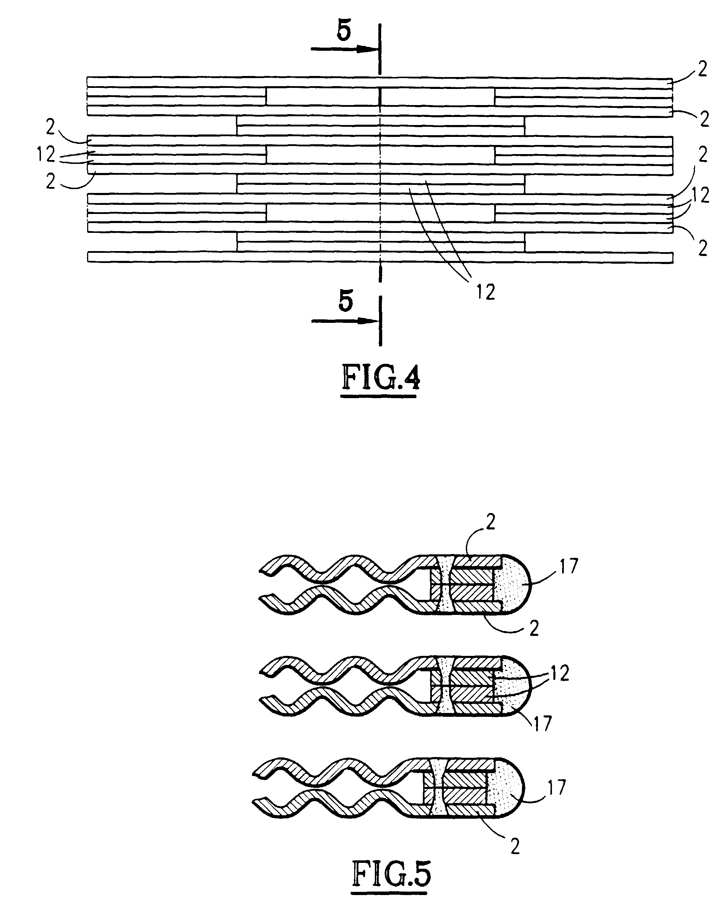

Les zones d'extrémité 10 du faisceau de plaques 1 sont fermées par des languettes 12 assemblées aux plaques 2 adjacentes, comme représentés à la Fig. 5.

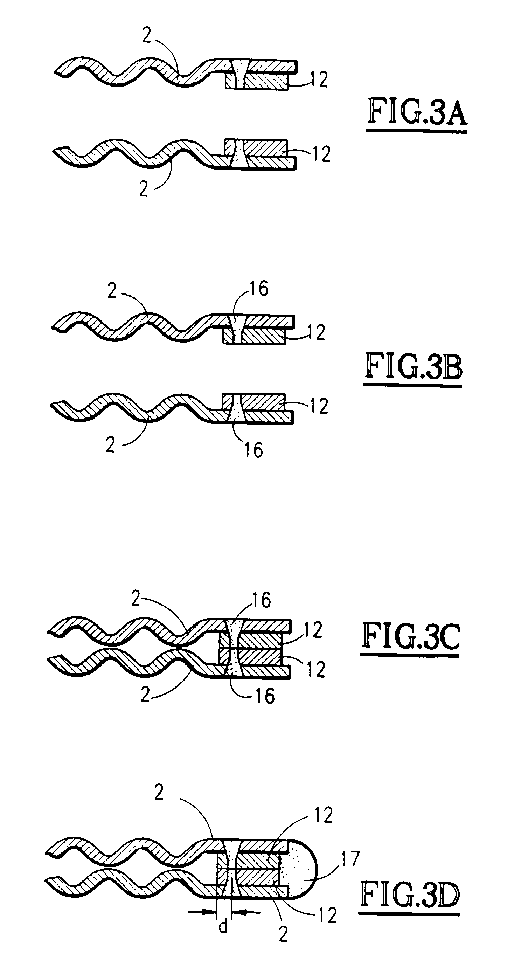

En se reportant maintenant aux Figs. 3A à 3D, on va décrire le procédé d'assemblage des plaques 2 du faisceau de plaques 1.

Tout d'abord, le procédé d'assemblage consiste à positionner à des emplacements correspondant aux zones d'extrémité 10 fermées, des languettes 12 sur les faces supérieures et inférieures des bords 3 des plaques 2, ainsi que représenté à la Fig. 3A.

Chaque languette 12 est reliée à la plaque 2 correspondante par un cordon de soudure 16 continu, comme représenté à la Fig. 3B.

Le cordon de soudure 16 est du type traversant et sans métal d'apport et est réalisé au moyen d'un faisceau à haute densité d'énergie, comme par exemple un faisceau laser.

Les plaques 2 munies des languettes 12 sont superposées, comme représentées à la Fig. 4, et maintenues les unes sur les autres par exemple au moyen d'une presse.

Ensuite, les plaques 2 munies des languettes 12 sont reliées entre elles par un cordon de soudure 17 continu et étanche avec ou sans métal d'apport recouvrant les extrémités libres desdites plaques 2 ainsi que desdites languettes 12, comme représenté sur les Figs. 3D et 5.

Ce cordon de soudure 17 est réalisé par le procédé TIG ou MIG.

La distance d entre le cordon de soudure 16 et l'extrémité interne de la languette 12 correspondante est réduite au minimum selon les règles de l'art du soudage par faisceau à haute densité d'énergie, ce qui limite de façon significative les possibilités de fléchissement de la plaque 2 correspondante.

Comme représenté sur les Figs. 1, 4 et 5, le faisceau de plaques 1 comporte sur ses faces latérales des zones d'extrémité 10 fermées par les languettes 12 et des zones d'extrémités 11 ouvertes formant des entrées ou des sorties pour les fluides circulant dans les circuits.

Compte tenu de ce procédé d'assemblage des couples de plaques 15, le faisceau de plaques 1 peut être utilisé à des pressions internes relativement élevées ce qui n'était pas le cas avec un faisceau de plaques réalisé par le procédé selon l'état de la technique.

D'autre part, chaque soudure 16 réalisée par faisceau à haute densité d'énergie est en contact avec le fluide interne et constitue une barrière qui protège la soudure externe 17 de toute pollution par des dépôts ou des encrassements.

De ce fait, cette soudure externe 17 reste parfaitement propre et réparable à tout moment en cas de fuites.

Le procédé d'assemblage selon l'invention permet également d'obtenir une meilleure étanchéité des circuits de circulation des fluides ainsi qu'une liaison mécanique parfaitement résistante, pouvant accepter des pressions différentielles relativement élevées ce qui élargit le domaine d'utilisation d'un tel faisceau de plaques.

## Revendications

1. Procédé d'assemblage des plaques d'un faisceau de plaques (1) d'échange thermique formé par un empilement de plaques (2) comportant chacune une partie centrale (4) munie d'ondulations (5) et des bords (3) à surface lisse et reliées entre elles par des languettes (12) délimitant des zones d'entrée et de sortie pour la circulation d'au moins deux fluides entre lesdites plaques (2), caractérisé en ce qu'il consiste :
- à positionner à des emplacements déterminés des languettes (12) sur les faces supérieures et inférieures des bords (3) des plaques (2) du faisceau de plaques (1),
- à relier chaque languette (12) avec la plaque (2) correspondante par un cordon de soudure (16) continu du type traversant et sans métal d'apport,
- à superposer et à maintenir les plaques (2) munies des languettes (12),
- et à relier les plaques (2) munies des languettes (12) par un cordon de soudure (17) continu et étanche, avec ou sans métal d'apport, recouvrant les extrémités libres desdites plaques (2) et desdites languettes (12).

2. Procédé selon la revendication 1, caractérisé en ce que chaque cordon de soudure (16) du type traversant est réalisé au moyen d'un faisceau à haute densité d'énergie.

3. Faisceau de plaques d'échange thermique, caractérisé en ce qu'il comporte des plaques (2) superposées et assemblées par le procédé selon la revendication 1 ou 2.
